# EUROPEAN PATENT APPLICATION

(11) **EP 4 668 946 A1**
(43) Date of publication of application: **24.12.2025**
(21) Application number: 23922021.3
(22) Date of filing: 17.02.2023
(51) Int. Cl.: H04W 72/0446

(54) **SYNCHRONIZATION SIGNAL BLOCK RECEIVING METHOD AND APPARATUS, AND SYNCHRONIZATION SIGNAL BLOCK SENDING METHOD AND APPARATUS**

(71) Applicant: Beijing Xiaomi Mobile Software Co., Ltd., Beijing 100085 (CN)
(72) Inventor: WANG, Lei, Beijing 100085 (CN)
(74) Representative: Dehns Germany Partnerschaft mbB
(86) International application number: PCT/CN2023/076957
(87) International publication number: WO 2024/168890

(57) **Abstract**

The present disclosure relates to the technical field of communications, and in particular to a synchronization signal block (SSB) receiving method and apparatus, and a SSB sending method and apparatus. The SSB receiving method comprises: determining that an SSB overlaps with an uplink transmission in an uplink subband on a time domain resource; and according to indication information sent by a network device, determining how to receive the SSB, or according to a protocol agreement, determining how to receive the SSB. In the present disclosure, when an SSB overlaps with an uplink transmission on a time domain resource, according to an indication of a network device or a protocol agreement, a terminal can determine how to receive the SSB, such that the terminal can receive the SSB in a determined manner, which is beneficial for ensuring that a terminal correctly receives an SSB.

## Description

### TECHNICAL FIELD

The present disclosure relates to the field of communication technology, and in particular to a synchronization signal block receiving method, a synchronization signal block sending method, a synchronization signal block receiving apparatus, a synchronization signal block sending apparatus, a communication system, a terminal, a network device and a computer-readable storage medium.

### BACKGROUND

A terminal can receive a Synchronization Signal Block (SSB) sent by a network device. However, in some cases, the SSB conflicts with uplink transmission of the terminal, which can cause problems for the terminal to receive the SSB.

### SUMMARY

The embodiments of the present disclosure propose a synchronization signal block receiving method, a synchronization signal block sending method, a synchronization signal block receiving apparatus, a synchronization signal block sending apparatus, a communication system, a terminal, a network device and a computer-readable storage medium to solve technical problems in the related art.

According to a first aspect of an embodiment of the present disclosure, a synchronization signal block receiving method is proposed, which is performed by a terminal, and the method includes: determining that a synchronization signal block overlaps with uplink transmission in an uplink subband in a time domain resource; and determining, according to indication information sent by a network device, how to receive the synchronization signal block, or determining, according to a protocol agreement, how to receive the synchronization signal block.

According to a second aspect of an embodiment of the present disclosure, a synchronization signal block sending method is proposed, which is performed by a network device, and the method includes: determining that a synchronization signal block overlaps with an uplink transmission in an uplink subband configured for a terminal in a time domain resource; and determining, according to indication information sent to the terminal, how to send the synchronization signal block to the terminal, or determining, according to a protocol agreement, how to send the synchronization signal block to the terminal.

According to a third aspect of an embodiment of the present disclosure, a synchronization signal block receiving apparatus is proposed, and the apparatus includes: a processing module, configured to determine that a synchronization signal block overlaps with an uplink transmission in an uplink subband in a time domain resource; and determine, according to indication information sent by a network device, how to receive the synchronization signal block, or determine, according to a protocol agreement, how to receive the synchronization signal block.

According to a fourth aspect of an embodiment of the present disclosure, a synchronization signal block sending apparatus is proposed, and the apparatus includes: a processing module, configured to determine that a synchronization signal block overlaps with an uplink transmission in an uplink subband configured for a terminal in a time domain resource; and determine, according to indication information sent to the terminal, how to send the synchronization signal block to the terminal, or determine, according to a protocol agreement, how to send the synchronization signal block to the terminal.

According to the fifth aspect of an embodiment of the present disclosure, a communication system is proposed, including a terminal and a network device, where the terminal is configured to implement the above synchronization signal block receiving method, and the network device is configured to implement the above synchronization signal block sending method.

According to a sixth aspect of an embodiment of the present disclosure, a terminal is proposed, including: a processor; and a memory configured to store a computer program; where the computer program, when being executed by the processor, implements the above synchronization signal block receiving method.

According to a seventh aspect of an embodiment of the present disclosure, a network device is proposed, including: a processor; and a memory configured to store a computer program; where the computer program, when being executed by the processor, implements the above synchronization signal block sending method.

According to an eighth aspect of an embodiment of the present disclosure, there is proposed a computer-readable storage medium configured to store a computer program, where the computer program, when being executed by a processor, implements the above synchronization signal block receiving method.

According to a ninth aspect of an embodiment of the present disclosure, there is proposed a computer-readable storage medium configured to store a computer program, where the computer program, when being executed by a processor, implements the above synchronization signal block sending method.

According to the embodiments of the present disclosure, when SSB overlaps with uplink transmission in the time domain resource, the terminal can determine how to receive the SSB according to the indication of the network device or the protocol agreement, so that the terminal can receive the SSB in a determined manner, which is conducive to ensuring that the terminal correctly receives the SSB.

### BRIEF DESCRIPTION OF THE DRAWINGS

In order to more clearly illustrate the technical solutions in the embodiments of the present disclosure, the drawings required for use in the description of the embodiments will be briefly introduced below. Obviously, the drawings described below are only some embodiments of the present disclosure. For those of ordinary skill in the art, other drawings can be obtained based on these drawings without creative work.
FIG. 1 is a schematic diagram showing an application scenario according to an embodiment of the present disclosure.
FIG. 2 is a schematic diagram showing uplink resources and downlink resources according to an embodiment of the present disclosure.
FIG. 3 is a schematic flowchart of a synchronization signal block receiving method according to an embodiment of the present disclosure.
FIG. 4A to FIG. 4C are schematic diagrams showing an synchronization signal block overlapping with uplink transmission on a time domain resource according to an embodiment of the present disclosure.
FIG. 5 is a schematic flowchart of another synchronization signal block receiving method according to an embodiment of the present disclosure.
FIG. 6 is a schematic flowchart of a synchronization signal block sending method according to an embodiment of the present disclosure.
FIG. 7 is a schematic block diagram of a synchronization signal block receiving apparatus according to an embodiment of the present disclosure.
FIG. 8 is a schematic block diagram of a synchronization signal block sending apparatus according to an embodiment of the present disclosure.
FIG. 9 is a schematic block diagram of an apparatus for sending a synchronization signal block according to an embodiment of the present disclosure.
FIG. 10 is a schematic block diagram of an apparatus for receiving a synchronization signal block according to an embodiment of the present disclosure.

### DETAILED DESCRIPTION

The implementations or embodiments of the present disclosure are not exhaustive, but are only illustrative of some implementations or embodiments, and are not intended to be specific limitations on the protection scope of the present disclosure. In the absence of contradiction, each step in a certain implementation or embodiment can be implemented as an independent embodiment, and the steps can be combined arbitrarily. For example, the technical solution with some steps in a certain implementation or embodiment being removed can also be implemented as an independent embodiment, and the order of the steps in a certain implementation or embodiment can be arbitrarily exchanged. In addition, the optional methods or optional instances in a certain implementation or embodiment can be combined arbitrarily; in addition, the various implementations or embodiments can be combined arbitrarily, for example, some or all steps of different implementations or embodiments can be combined arbitrarily, and a certain implementation or embodiment can be combined arbitrarily with the optional methods or optional instances of other implementations or embodiments.

In some implementations or embodiments, "in response to...", "in the case of...", "at the time of...", "when...", "if...", etc. in the present disclosure may be replaced with each other.

In some implementations or embodiments, the recitations of the present disclosure such as "A or B", "A and/or B", "at least one of A and B", "A in one case, B in another case", "in response to one case A, in response to another case B", etc., may include at least one of the following technical solutions depending on the situation: executing A independently of B, that is, A in some implementations or embodiments; executing B independently of A, that is, B in some implementations or embodiments; selectively executing A or B, that is, selecting to execute from A and B in some implementations or embodiments; or executing both A and B, that is, A and B in some implementations or embodiments.

In some implementations or embodiments, "including A", "comprising A", "used to indicate A" and "carrying A" in the present disclosure may be interpreted as directly carrying A or indirectly indicating A.

In addition, each element, each row, or each column in the table involved in the present disclosure can be implemented as an independent embodiment, and the combination of any elements, any rows, and any columns can also be implemented as an independent embodiment.

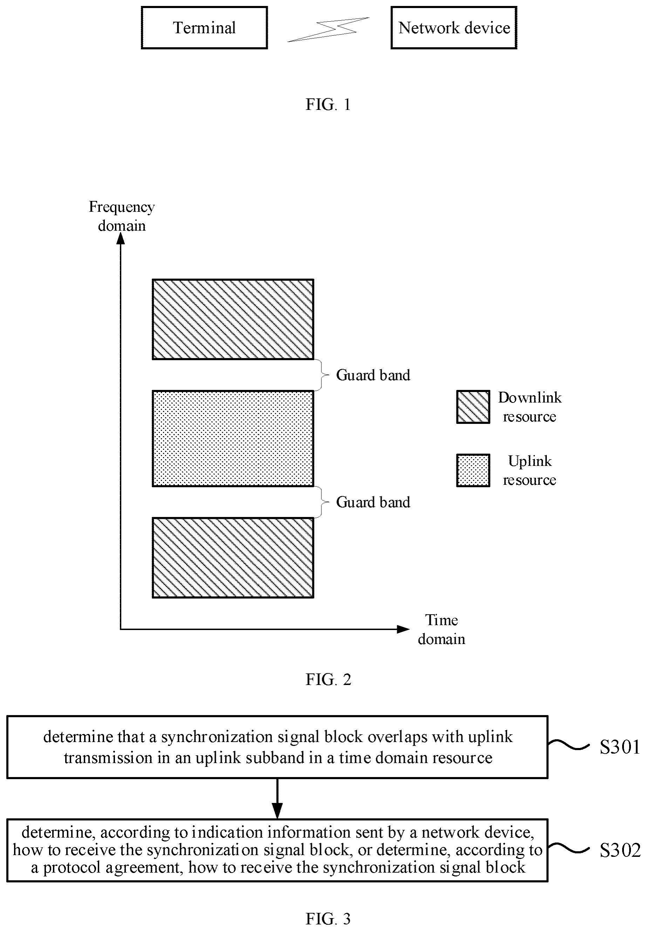

FIG. 1 is a schematic diagram showing an application scenario according to an embodiment of the present disclosure.

As shown in FIG. 1, the embodiments of the present disclosure can be applied to a scenario where a terminal communicates with a network device, but is not limited to this scenario. The subjects shown in FIG. 1 are for illustration, and the implementations or embodiments of the present disclosure may include all or part of the subjects in FIG. 1, or may include other subjects beyond those in FIG. 1. The number of subjects is arbitrary and is not limited to FIG. 1. The connection relationships shown in FIG. 1 are for illustration, any subjects may be connected or disconnected, and the connection may be in any manner, which may be a direct connection or an indirect connection, or may be a wired connection or a wireless connection.

In an embodiment, the terminal includes but is not limited to communication devices such as a mobile phone, a tablet computer, a wearable device, a sensor, and an Internet of Things device. The terminal can communicate with a network device, which includes but is not limited to network devices in 4G, 5G, 6G and other communication systems, such as a base station, a core network, etc.

FIG. 2 is a schematic diagram showing uplink resources and downlink resources according to an embodiment of the present disclosure.

As shown in FIG. 2, the network device configures an uplink subband for the terminal in downlink time domain resources (e.g., semi-static downlink symbols), the uplink subband is an uplink resource, and the frequency domain resources other than the uplink subband and a guard band in frequency domain resources corresponding to the downlink time domain resources are downlink resources, where the downlink resources can also be called downlink subbands. The guard band is set between the downlink resource and the uplink resource, and the guard band is not used to transmit information, including data and/or signals, so that frequency domain isolation can be achieved to a certain extent, avoiding interference between uplink and downlink communications.

It should be noted that the embodiments of the present disclosure may be applicable to the case where the guard band is set between the downlink resource and the uplink resource, and may also be applicable to the case where no guard band is set between the downlink resource and the uplink resource. The illustrative explanation of the present disclosure is provided below in the following embodiments in the case where the guard band is set between the downlink resource and the uplink resource.

The terminal can perform uplink transmission in the uplink subband of the downlink time domain resources, where the terminal can be a full-duplex terminal or a legacy terminal, and the legacy terminal can be a half-duplex terminal. The network device can be a full-duplex network device, which can receive the uplink transmission of the terminal in the uplink subband of the downlink time domain resources, and can also send (for example, in the form of broadcast), in frequency domain resources except the uplink subband in the frequency domain resources corresponding to the downlink time domain resources, a synchronization signal block (SSB) to the terminal in the cell.

In this case, the SSB and uplink transmission overlap in the downlink time domain resources. The uplink transmission of the terminal will cause Cross-Link Interference (CLI) to the downlink transmission (such as the above SSB), resulting in problems in the terminal receiving the SSB.

The embodiments of the present disclosure may be applicable to the above scenarios where the SSB and uplink transmission overlap in the downlink time domain resources, and may also be applicable to other scenarios where the SSB and uplink transmission overlap in the time domain resources.

FIG. 3 is a schematic flow chart of a synchronization signal block receiving method according to an embodiment of the present disclosure. The synchronization signal block receiving method shown in this embodiment can be performed by a terminal.

As shown in FIG. 3, the synchronization signal block receiving method may include the following steps.

In step S301, it is determined that a synchronization signal block overlaps with uplink transmission in an uplink subband in a time domain resource.

In step S302, it is determined, according to indication information sent by a network device, how to receive the synchronization signal block, or it is determined, according to a protocol agreement, how to receive the synchronization signal block.

The uplink transmission may include sending data to the network device, or may include sending signaling to the network device, which is not limited in the present disclosure.

In an embodiment, the uplink transmission includes at least one of the following:
uplink transmission on a dynamically scheduled resource, such as a dynamically scheduled Physical Uplink Shared Channel (PUSCH); or
uplink transmission on a pre-configured resource, such as a CG PUSCH, where CG can be translated as configured grant.

In an embodiment, the SSB overlapping with the uplink transmission in the time domain resource includes at least one of the following:
a first time domain unit where the SSB is located partially overlaps with a second time domain unit where the uplink transmission is located; or
the first time domain unit where the SSB is located completely overlaps with the second time domain unit where the uplink transmission is located.

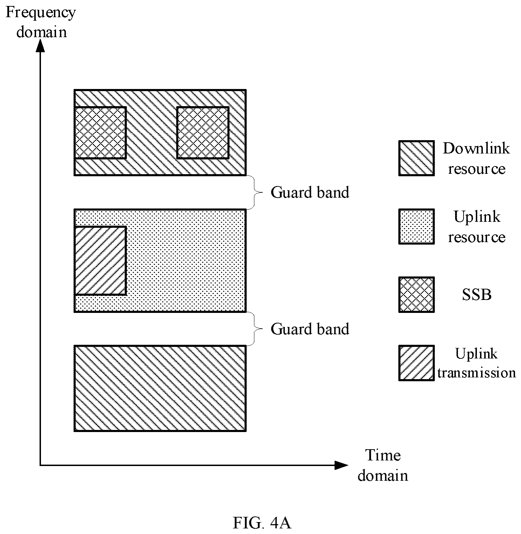

FIG. 4A to FIG. 4C are schematic diagrams showing the synchronization signal block overlapping with the uplink transmission in the time domain resource according to an embodiment of the present disclosure.

Taking an example in which the SSB overlaps with the uplink transmission in a downlink slot, that is, the time domain resource includes the downlink slot, in this case, the slot can be called a SubBand Full Duplex (SBFD) slot. The overlapping of the SSB and the uplink transmission in the time domain resource can include any of the cases in FIG. 4A to FIG. 4C.

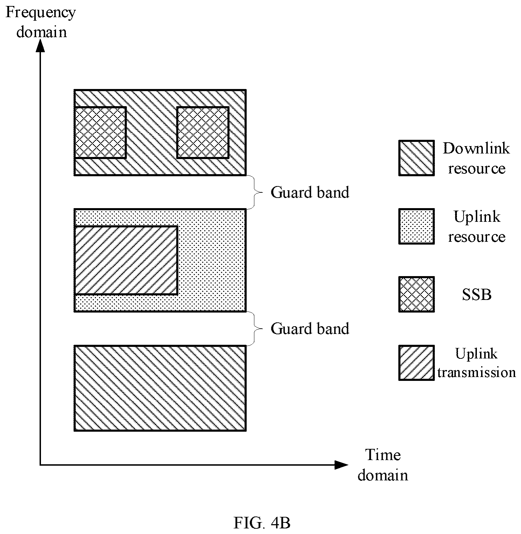

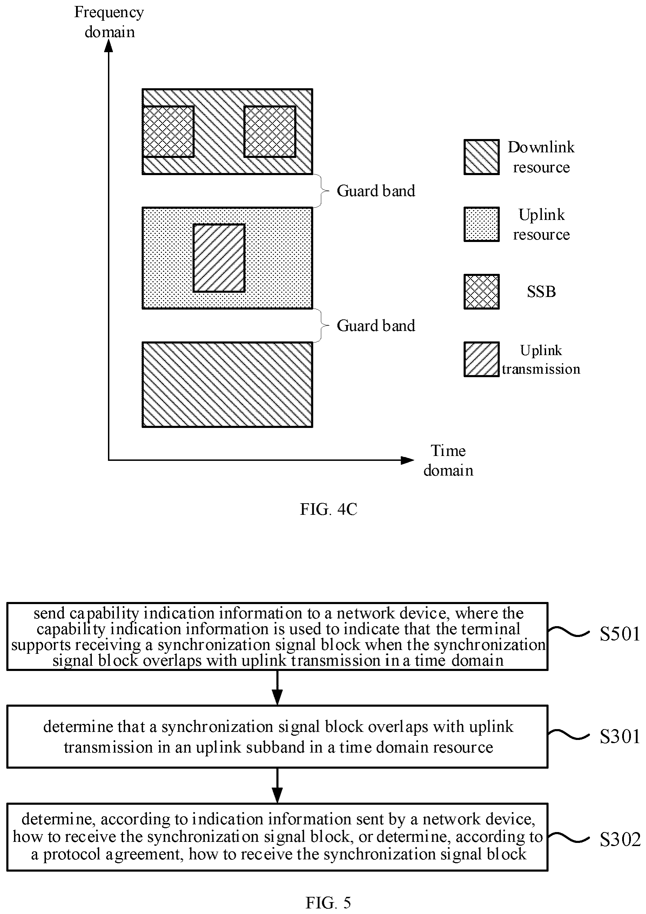

As shown in FIG. 4A, the time domain resource where the SSB is located completely overlaps with the time domain resource where the uplink transmission is located. As shown in FIG. 4B, the time domain resource where the SSB is located partially overlaps with the time domain resource where the uplink transmission is located. As shown in FIG. 4C, a slot where the SSB is located overlaps with a slot where the uplink transmission is located, but in the overlapping slot, the time domain resource where the SSB is located does not overlap with the symbols where the uplink transmission is located.

In an embodiment, the uplink subband includes at least one of the following:
an uplink subband configured in a flexible time domain unit; or
an uplink subband configured in a downlink time domain unit.

The time domain unit includes at least one of the following: a frame, a subframe, a slot, and a symbol. The symbol may be an OFDM (Orthogonal Frequency Division Multiplexing) symbol.

Since the SSB and uplink transmission overlap in the time domain resource, there is a problem that the uplink transmission may cause cross-link interference to the SSB, resulting in problems in receiving the SSB by the terminal.

According to the embodiment of the present disclosure, when the SSB overlaps with the uplink transmission in the time domain resource, the terminal can determine how to receive the SSB according to the indication of the network device or the protocol agreement, so that the terminal can receive the SSB in a determined manner, which is conducive to ensuring that the terminal correctly receives the SSB.

In an embodiment, determining how to receive the synchronization signal block according to the protocol agreement includes:
according to the protocol agreement, receiving the synchronization signal block in the case where the number of frequency domain units spaced between the synchronization signal block and the uplink transmission is greater than or equal to a first number.

In an embodiment, the time domain unit includes at least one of the following: a Resource Element (RE), or a Resource Block (RB).

Taking an example in which the time domain unit includes RB, for example, the first number is T, and the terminal does not expect an interval between the SSB and the uplink transmission in the frequency domain to be less than T RBs. Correspondingly, the network device will not configure the interval between the sent SSB and the uplink transmission of the terminal in the frequency domain to be less than T RBs. Then the terminal can receive the SSB in the case where the number of the RBs spaced between the SSB and the uplink transmission is greater than or equal to T.

According to the embodiment of the present disclosure, since the interval between the SSB and the uplink transmission in the frequency domain is relatively large, for example, the number of the spaced frequency domain units is greater than or equal to the first number, a relatively high degree of frequency domain isolation will be generated. Even if the time domain resources of the SSB and the uplink transmission overlap, the interference on the SSB caused by uplink transmission will be relatively small, which is beneficial to SSB reception quality.

In an embodiment, the synchronization signal block receiving method further includes at least one of the following :
determining the first number according to the protocol agreement;
determining the first number based on capability information of the terminal sent to the network device; or
determining the first number according to signaling sent by the network device.

In an embodiment, the first number may be agreed upon by the protocol. In another embodiment, the first number may be indicated by the network device, for example, indicated by the network device through signaling. In yet another embodiment, the network device may send capability information to the terminal, for example, the capability information is used to indicate that when the time domain resources of the SSB and the uplink transmission overlap, the terminal supports receiving the SSB in the case where the SSB and the uplink transmission are spaced by the first number of frequency domain units in the frequency domain, and then the first number may be determined to be the first number indicated in the capability information.

In an embodiment, the synchronization signal block receiving method further includes: determining that a case in which the number of frequency domain units spaced between the synchronization signal block and the uplink subband is less than a second number is an error case.

When the number of frequency domain units spaced between the SSB and the uplink subband is less than the second number, it can be determined that interval between the SSB and the uplink subband in the frequency domain is relatively large, the interference on the SSB by the uplink subband is relatively strong, and it is difficult for the terminal to ensure the reception quality of the SSB. Therefore, this case can be determined as an error case.

In the event of the error case, the terminal may choose to perform only the uplink transmission or to only receive the SSB on the time domain resource where the SSB and the uplink transmission overlap, so as to ensure that at least one of the uplink transmission and the downlink transmission can proceed smoothly.

In an embodiment, determining how to receive the synchronization signal block according to the protocol agreement includes: according to the protocol agreement, receiving the synchronization signal block in the case where the uplink transmission is not performed on the time domain resource where the synchronization signal block is located.

In an embodiment, the terminal may not expect to perform the uplink transmission on the time domain resource where the SSB is located, for example, the time domain resource where the SSB is located includes symbols. Correspondingly, the network device will not schedule the terminal to perform uplink transmission on the time domain resource where the SSB is located.

Then the terminal can receive the SSB in the case where the uplink transmission is not performed in the time domain resource where the SSB is located. Since the uplink transmission is not performed in the time domain resource where the SSB is located, the uplink transmission will not cause interference on the SSB reception process, and good reception quality of the SSB can be ensured.

In an embodiment, not performing the uplink transmission in the time domain resource where the synchronization signal block is located includes one of the following:
not expecting that a first time domain resource where the synchronization signal block is located overlaps with a second time domain resource where the uplink transmission is located; or
performing the uplink transmission in a time domain resource in the second time domain resource that does not overlap with the first time domain resource.

In an embodiment, not performing the uplink transmission in the time domain resource where the synchronization signal block is located may include that the terminal does not expect the first time domain resource where the synchronization signal block is located to overlap with the second time domain resource where the uplink transmission is located. Correspondingly, the first time domain resource where the network device sends the SSB to the terminal does not overlap with the second time domain resource where the terminal is scheduled to perform uplink transmission. Since the first time domain resource where the SSB is located does not overlap with the second time domain resource where the uplink transmission is located, the uplink transmission will not cause interference on the SSB reception process, and good reception quality of the SSB can be ensured.

In an embodiment, not performing the uplink transmission in the time domain resource where the synchronization signal block is located may include performing the uplink transmission in the time domain resource in the second time domain resource that does not overlap with the first time domain resource. The first time domain resource where the network device sends the SSB to the terminal may overlap with the second time domain resource where the terminal is scheduled to perform the uplink transmission, but the terminal performs the uplink transmission only in the time domain resource in the second time domain resource that does not overlap with the first time domain resource. Then, the time domain resource actually used for uplink transmission does not overlap with the first time domain resource where the SSB is located. Then, the uplink transmission will not interfere with the reception process of the SSB, and good reception quality of the SSB can be ensured.

In an embodiment, determining how to receive the synchronization signal block according to the indication information sent by the network device includes:
determining, according to the indication information, that the synchronization signal block can be received on the time domain resource where the synchronization signal block overlaps with the uplink transmission or that the uplink transmission cannot be performed on the time domain resource where the synchronization signal block overlaps with the uplink transmission, and receiving the synchronization signal block on the overlapping time domain resource.

The indication information includes at least one of the following: system information, a System Information Block (SIB), or Radio Resource Control (RRC) signaling. The number of bits occupied by the indication information can be set as needed. For example, the indication information and the indicated content are shown in Table 1:

**Table 1**

| Indication information | Behavior on the time domain resource where SSB and uplink transmission overlap |
|---|---|
| 0 | can receive SSB/cannot perform uplink transmission |
| 1 | cannot receive SSB/can perform uplink transmission |

As shown in Table 1, for example, the indication information occupies 1 bit. When the indication information is 0, it can indicate that the SSB can be received on the time domain resource where the SSB and the uplink transmission overlap, or that the uplink transmission cannot be performed on the time domain resource where the SSB and the uplink transmission overlap. When the indication information is 1, it can indicate that the SSB cannot be received on the time domain resource where the SSB and the uplink transmission overlap, or that the uplink transmission can be performed on the time domain resource where the SSB and the uplink transmission overlap.

In an embodiment, the network device may send indication information to the terminal, where the indication information is used to indicate whether the terminal can receive the SSB on the time domain resource where the SSB and the uplink transmission overlap, or whether the terminal can perform the uplink transmission on the time domain resource where the SSB and the uplink transmission overlap.

When the indication information indicates that the terminal can receive the SSB on the time domain resource where the SSB and the uplink transmission overlap, or when the indication information indicates that the terminal cannot perform the uplink transmission on the time domain resource where the SSB and the uplink transmission overlap, the terminal can determine that the SSB can be received but the uplink transmission cannot be performed on the overlapping time domain resource. Since the SSB can be received on the overlapping time domain resource but uplink transmission cannot be performed on the overlapping time domain resource, the uplink transmission will not cause interference on the SSB reception process, and good reception quality of SSB can be ensured.

When the indication information indicates that the terminal cannot receive the SSB on the time domain resource where the SSB and the uplink transmission overlap, or the indication information indicates that the terminal can perform the uplink transmission on the time domain resource where the SSB and the uplink transmission overlap, the terminal can determine that the SSB cannot be received on the overlapping time domain resource but the uplink transmission can be performed on the overlapping time domain resource. Since the uplink transmission can be performed on the overlapping time domain resource, the uplink transmission will cause interference in the SSB reception process, and therefore, only the uplink transmission can be performed on the overlapping time domain resource, and the SSB is not received on the overlapping time domain resource.

FIG. 5 is a schematic flow chart of another synchronization signal block receiving method according to an embodiment of the present disclosure. The synchronization signal block receiving method shown in this embodiment can be performed by a terminal.

As shown in FIG. 5, the synchronization signal block receiving method further includes:
in step S501, sending capability indication information to a network device, where the capability indication information is used to indicate that the terminal supports receiving the synchronization signal block when the synchronization signal block overlaps with the uplink transmission in the time domain.

It should be noted that the embodiment shown in FIG. 5 can be implemented independently or in combination with at least one other embodiment in the present disclosure, which can be specifically selected as needed, and is not limited in the present disclosure.

In an embodiment, the terminal may send the capability indication information to the network device, and the capability indication information indicates whether the terminal supports receiving the SSB when the SSB overlaps with the uplink transmission in the time domain resource.

If the terminal supports receiving the SSB when the SSB overlaps with the uplink transmission on the time domain resource, the network device can send the SSB to the terminal on the time domain resource when configuring the terminal to perform the uplink transmission on the time domain resource.

If the terminal does not support receiving the SSB when the SSB overlaps with the uplink transmission on the time domain resource, the network device may not send the SSB to the terminal on the time domain resource when configuring the terminal to perform the uplink transmission on the time domain resource; or, the network device may not configure the terminal to perform the uplink transmission on the time domain resource when sending the SSB to the terminal on the time domain resources. Correspondingly, the terminal does not expect the time domain resource where the SSB is located to overlap with the time domain resource where uplink transmission is located.

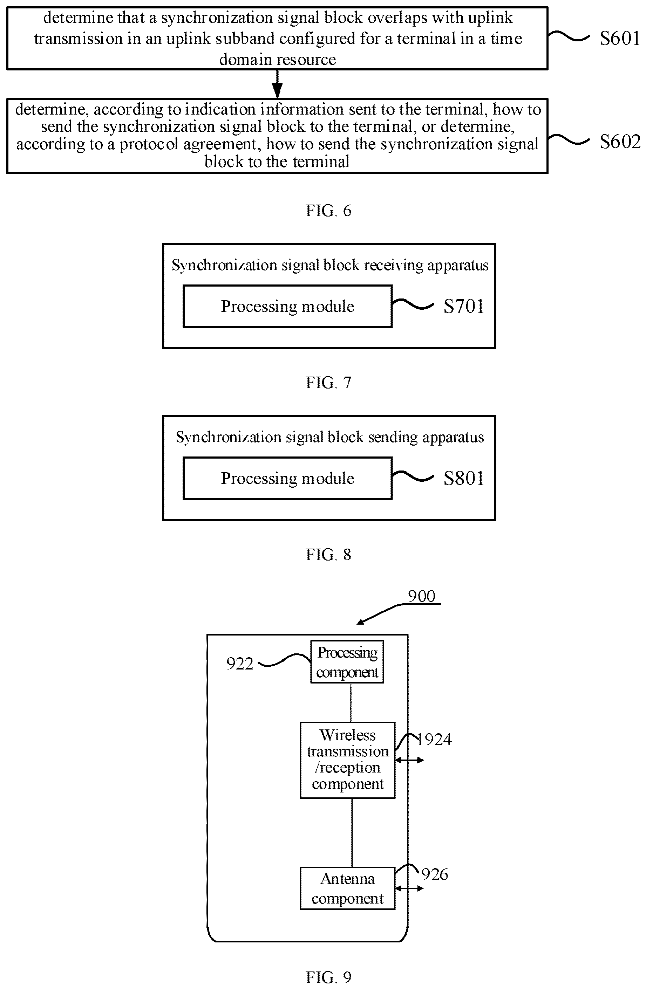

FIG. 6 is a schematic flow chart of a synchronization signal block sending method according to an embodiment of the present disclosure. The synchronization signal block sending method shown in this embodiment can be performed by a network device, and the network device can communicate with a terminal. The network device includes but is not limited to base stations in communication systems, such as a 4G base station, a 5G base station, or a 6G base station, and the terminal includes but is not limited to communication devices such as a mobile phone, a tablet computer, a wearable device, a sensor, or an Internet of Things device.

As shown in FIG. 6, the synchronization signal block sending method may include the following steps.

In step S601, it is determined that a synchronization signal block overlaps with uplink transmission in an uplink subband configured for a terminal in a time domain resource.

In step S602, it is determined, according to indication information sent to the terminal, how to send the synchronization signal block to the terminal, or it is determined, according to a protocol agreement, how to send the synchronization signal block to the terminal.

The uplink transmission may include sending data to the network device, or may include sending signaling to the network device, which is not limited in the present disclosure.

In an embodiment, the uplink transmission includes at least one of the following:
uplink transmission on a dynamically scheduled resource, such as a PUSCH; or
uplink transmission on a pre-configured resource, such as a CG PUSCH.

In an embodiment, the SSB overlapping with the uplink transmission in the time domain resource includes at least one of the following:
a first time domain unit where the SSB is located partially overlaps with a second time domain unit where the uplink transmission is located; or
the first time domain unit where the SSB is located completely overlaps with the second time domain unit where the uplink transmission is located.

In an embodiment, determining how to send the synchronization signal block to the terminal according to the protocol agreement includes: according to the protocol agreement, sending the synchronization signal block to the terminal in the case where the number of frequency domain units spaced between the synchronization signal block and the uplink transmission is greater than or equal to a first number.

In an embodiment, the uplink subband includes at least one of the following:
an uplink subband configured in a flexible time domain unit; or
an uplink subband configured in a downlink time domain unit.

The time domain unit includes at least one of the following: a frame, a subframe, a slot, or a symbol, and the symbol may be an OFDM symbol.

Since the SSB and the uplink transmission overlap in the time domain resource, there is a problem that the uplink transmission may cause cross-link interference on the SSB, resulting in problems with reception of the SSB by the terminal.

According to the embodiment of the present disclosure, when the SSB overlaps with the uplink transmission in the uplink subband configured for the terminal in the time domain resource, the network device can determine how to send the SSB to the terminal according to the indication information sent to the terminal or the protocol agreement. Correspondingly, the terminal can determine how to receive the SSB according to the indication information or the protocol agreement, so that the network device and the terminal can reach a consistent manner on sending and receiving the SSB, which is conducive to ensuring that the terminal correctly receives the SSB.

In an embodiment, determining how to send the synchronization signal block to the terminal according to the protocol agreement includes: according to the protocol agreement, sending the synchronization signal block to the terminal in the case where the number of frequency domain units spaced between the synchronization signal block and the uplink transmission interval is greater than or equal to a first number.

In an embodiment, the time domain unit includes at least one of the following: a Resource Element (RE), or a Resource Block (RB).

Taking an example in which the time domain unit includes RB, for example, the first number is T, and the terminal does not expect an interval between the SSB and the uplink transmission in the frequency domain to be less than T RBs. Correspondingly, the network device will not configure the interval between the sent SSB and the uplink transmission of the terminal in the frequency domain to be less than T RBs. Then the terminal can receive the SSB in the case where the number of RBs spaced between the SSB and the uplink transmission is greater than or equal to T.

According to the embodiment of the present disclosure, since the interval between the SSB and uplink transmission in the frequency domain is relatively large, for example, the number of the spaced frequency domain units is greater than or equal to the first number, a relatively high degree of frequency domain isolation will be generated. Even if the time domain resources of the SSB and uplink transmission overlap, the interference on the SSB caused by the uplink transmission is relatively small, which is beneficial to the reception quality of SSB.

In an embodiment, the synchronization signal block sending method further includes at least one of the following:
determining the first number according to the protocol agreement;
determining the first number according to capability information of the terminal; or
determining the first number according to signaling sent to the terminal.

In an embodiment, the first number may be agreed upon by a protocol. In another embodiment, the first number may be indicated by the network device, for example, indicated by the network device through signaling. In yet another embodiment, the network device may send the capability information to the terminal, for example, the capability information is used to indicate that when the time domain resources of the SSB and the uplink transmission overlap, the terminal supports receiving the SSB when the SSB and the uplink transmission are spaced by the first number of frequency domain units in the frequency domain, then the first number may be determined as the first number indicated in the capability information.

In an embodiment, determining how to send the synchronization signal block to the terminal according to the protocol agreement includes: according to the protocol agreement, sending the synchronization signal block to the terminal in a case where the uplink transmission is not performed in the time domain resource where the synchronization signal block is located.

In an embodiment, the terminal may not expect to perform the uplink transmission on the time domain resource where the SSB is located, for example, the time domain resource where the SSB is located includes symbols. Correspondingly, the network device will not schedule the terminal to perform the uplink transmission on the time domain resource where the SSB is located.

Then the terminal can receive the SSB in the case where the uplink transmission is not performed in the time domain resource where the SSB is located. Since the uplink transmission is not performed in the time domain resource where the SSB is located, the uplink transmission will not cause interference on the SSB reception process, and good reception quality of SSB can be ensured.

In an embodiment, not performing the uplink transmission in the time domain resource where the synchronization signal block is located includes one of the following:
a first time domain resource where the synchronization signal block is sent to the terminal does not overlap with a second time domain resource where the terminal is configured to perform the uplink transmission; or
receiving the uplink transmission of the terminal in a time domain resource in the second time domain resource that does not overlap with the first time domain resource.

In an embodiment, not performing the uplink transmission in the time domain resource where the synchronization signal block is located may include that the terminal does not expect the first time domain resource where the synchronization signal block is located to overlap with the second time domain resource where the uplink transmission is located. Correspondingly, the first time domain resource where the network device sends the SSB to the terminal does not overlap with the second time domain resource where the terminal is scheduled to perform the uplink transmission. Since the first time domain resource where the SSB is located does not overlap with the second time domain resource where the uplink transmission is located, the uplink transmission will not cause interference on the SSB reception process, and good reception quality of the SSB can be ensured.

In an embodiment, not performing the uplink transmission in the time domain resource where the synchronization signal block is located may include performing the uplink transmission in the time domain resource in the second time domain resource that does not overlap with the first time domain resource. The first time domain resource where the network device sends the SSB to the terminal may overlap with the second time domain resource where the terminal is scheduled to perform the uplink transmission, but the terminal performs the uplink transmission only in the time domain resource in the second time domain resource that does not overlap with the first time domain resource. Then, the time domain resource actually used for uplink transmission does not overlap with the first time domain resource where the SSB is located. Accordingly, the uplink transmission will not cause interference on the SSB reception process, and good reception quality of the SSB can be ensured.

In an embodiment, determining how to receive the synchronization signal block according to indication information sent to the terminal includes: determining, according to the indication information, that the terminal can receive the synchronization signal block or the terminal cannot perform the uplink transmission on the time domain resource where the synchronization signal block overlaps with the uplink transmission, and sending the synchronization signal block to the terminal on the overlapping time domain resource.

The indication information includes at least one of the following: system information, a System Information Block (SIB), or Radio Resource Control (RRC) signaling. The number of bits occupied by the indication information can be set as needed. For example, the indication information and the indicated content are as shown in Table 1 in the above embodiment. For example, the indication information occupies 1 bit. When the indication information is 0, it can indicate that the SSB can be received on the time domain resource where the SSB and the uplink transmission overlap, or that the uplink transmission cannot be performed on the time domain resource where the SSB and the uplink transmission overlap. When the indication information is 1, it can indicate that the SSB cannot be received on the time domain resource where the SSB and the uplink transmission overlap, or that the uplink transmission can be performed on the time domain resource where the SSB and the uplink transmission overlap.

In an embodiment, the network device may send indication information to the terminal, where the indication information is used to indicate whether the terminal can receive the SSB on the time domain resource where the SSB and uplink transmission overlap, or whether the terminal can perform the uplink transmission on the time domain resource where the SSB and uplink transmission overlap.

When the indication information indicates that the terminal can receive SSB on the time domain resource where the SSB overlaps with the uplink transmission, or the indication information indicates that the terminal cannot perform the uplink transmission on the time domain resource where the SSB overlaps with the uplink transmission, the terminal can determine that SSB can be received on the overlapping time domain resource but the uplink transmission cannot be performed on the overlapping time domain resource. Since the SSB can be received on the overlapping time domain resource and the uplink transmission cannot be performed on the overlapping time domain resource, the uplink transmission will not cause interference on the SSB reception process, and good reception quality of SSB can be ensured.

When the indication information indicates that the terminal cannot receive the SSB on the time domain resource where the SSB overlaps with the uplink transmission, or the indication information indicates that the terminal can perform the uplink transmission on the time domain resource where the SSB overlaps with the uplink transmission, the terminal can determine that the SSB cannot be received on the overlapping time domain resource but the uplink transmission cannot be performed on the overlapping time domain resource. Since the uplink transmission can be performed on the overlapping time domain resources, the uplink transmission will cause interference on the SSB reception process, and therefore, only the uplink transmission can be performed on the overlapping time domain resource and the SSB is not received on the overlapping time domain resource.

In an embodiment, the synchronization signal block sending method further includes: receiving capability indication information sent by the terminal, where the capability indication information is used to indicate that the terminal supports receiving the synchronization signal block when the synchronization signal block overlaps with the uplink transmission in the time domain.

In an embodiment, the terminal may send the capability indication information to the network device, and indicates through the capability indication information whether the terminal supports receiving the SSB when the SSB overlaps with the uplink transmission in time domain resource.

If the terminal supports receiving the SSB when the SSB overlaps with the uplink transmission on the time domain resource, the network device can send the SSB to the terminal on the time domain resource when configuring the terminal to perform the uplink transmission on the time domain resource.

If the terminal does not support receiving the SSB when the SSB overlaps with the uplink transmission on the time domain resource, the network device may not send the SSB to the terminal on the time domain resource when configuring the terminal to perform the uplink transmission on the time domain resource; or, may not configure the terminal to perform the uplink transmission on the time domain resource when sending the SSB to the terminal on the time domain resource. Correspondingly, the terminal does not expect the time domain resource where SSB is located to overlap with the time domain resource where the uplink transmission is located.

It should be noted that for other contents involved in this embodiment, reference can be made to the description of the relevant contents in the previous embodiments, which will not be repeated here.

Corresponding to the embodiments of the synchronization signal block receiving method and the synchronization signal block sending method, the present disclosure also provides embodiments of a synchronization signal block receiving apparatus and a synchronization signal block sending apparatus.

FIG. 7 is a schematic block diagram of a synchronization signal block receiving apparatus according to an embodiment of the present disclosure. As shown in FIG. 7, the synchronization signal block receiving apparatus includes:
a processing module 701, configured to determine whether a synchronization signal block overlaps with uplink transmission in an uplink subband in a time domain resource; and determine how to receive the synchronization signal block according to indication information sent by a network device, or determine how to receive the synchronization signal block according to a protocol agreement.

In an embodiment, the processing module is configured to receive the synchronization signal block in a case where the number of frequency domain units spaced between the synchronization signal block and the uplink transmission is greater than or equal to the first number according to the protocol agreement.

In an embodiment, the apparatus further comprises at least one of the following:
determining the first number according to the protocol agreement;
determine the first number according to capability information of the terminal sent to the network device; or
determine the first number according to signaling sent by the network device.

In an embodiment, the processing module is further configured to determine that a case where the number of frequency domain units spaced between the synchronization signal block and the uplink subband is less than a second number is an error case.

In an embodiment, the processing module is configured to receive the synchronization signal block in a case where the uplink transmission is not performed in the time domain resource where the synchronization signal block is located according to the protocol agreement.

In an embodiment, not performing the uplink transmission in the time domain resource where the synchronization signal block is located includes one of the following:
not expecting that a first time domain resource where the synchronization signal block is located overlaps with a second time domain resource where the uplink transmission is located; or
performing the uplink transmission in a time domain resource in the second time domain resource that does not overlap with the first time domain resource.

In an embodiment, the processing module is configured to determine that the synchronization signal block can be received or the uplink transmission cannot be performed in the time domain resource where the synchronization signal block overlaps with the uplink transmission according to the indication information, and receive the synchronization signal block on the overlapping time domain resource.

In an embodiment, the apparatus further includes: a sending module configured to send capability indication information to the network device, where the capability indication information is used to indicate that the terminal supports receiving the synchronization signal block when the synchronization signal block overlaps with the uplink transmission in the time domain.

In an embodiment, the uplink subband includes at least one of the following:
an uplink subband configured in a flexible time domain unit; or
an uplink subband configured in a downlink time domain unit.

FIG. 8 is a schematic block diagram of a synchronization signal block sending apparatus according to an embodiment of the present disclosure. As shown in FIG. 8, the synchronization signal block sending apparatus includes:
a processing module 801, configured to determine that a synchronization signal block overlaps with uplink transmission in an uplink subband configured for a terminal in a time domain resource; and determine how to send the synchronization signal block to the terminal according to indication information sent to the terminal, or determine how to send the synchronization signal block to the terminal according to a protocol agreement.

In an embodiment, the processing module is configured to send the synchronization signal block to the terminal in a case where the number of frequency domain units spaced between the synchronization signal block and the uplink transmission is greater than or equal to a first number according to the protocol agreement.

In an embodiment, the apparatus further comprises at least one of the following:
determining the first number according to the protocol agreement;
determining the first number according to capability information of the terminal; or
determining the first number according to signaling sent to the terminal.

In an embodiment, the processing module is configured to send the synchronization signal block to the terminal in a case where the uplink transmission is not performed in the time domain resource where the synchronization signal block is located according to the protocol agreement.

In an embodiment, not performing the uplink transmission in the time domain resource where the synchronization signal block is located includes one of the following:
a first time domain resource where the synchronization signal block is sent to the terminal does not overlap with a second time domain resource where the terminal is configured to perform the uplink transmission;
receiving the uplink transmission of the terminal in a time domain resource in the second time domain resource that does not overlap with the first time domain resource.

In an embodiment, the processing module is configured to determine, according to the indication information, that the terminal can receive the synchronization signal block or the terminal cannot perform the uplink transmission in the time domain resource where the synchronization signal block overlaps with the uplink transmission, and send the synchronization signal block to the terminal in the overlapping time domain resource.

In an embodiment, the device further includes: a receiving module configured to receive capability indication information sent by the terminal, where the capability indication information is used to indicate that the terminal supports receiving the synchronization signal block when the synchronization signal block overlaps with the uplink transmission in the time domain.

In an embodiment, the uplink subband includes at least one of the following:
an uplink subband configured in a flexible time domain unit; or
an uplink subband configured in a downlink time domain unit.

For the apparatus embodiments, since they basically correspond to the method embodiments, for the relevant parts, reference can be made to the partial description of the method embodiments. The apparatus embodiments described above is only illustrative, where the modules described as separate components may be or may not be physically separated, and the components shown as modules may be or may not be physical modules, that is, they may be located in one place, or they may be distributed on multiple network modules. Some or all of the modules may be selected according to actual needs to achieve the purpose of the solutions of the embodiments, which can be understood and implemented by those of ordinary skill in the art without paying creative work.

An embodiment of the present disclosure also proposes a communication system, including a terminal and a network device, where the terminal is configured to implement the synchronization signal block receiving method described in any of the above embodiments, and the network device is configured to implement the synchronization signal block sending method described in any of the above embodiments.

An embodiment of the present disclosure further proposes a terminal, including: a processor; and a memory configured to store a computer program; where the computer program, when being executed by the processor, implements the synchronization signal block receiving method described in any of the above embodiments.

An embodiment of the present disclosure further proposes a network device, including: a processor; and a memory configured to store a computer program; where the computer program, when being executed by the processor, implements the synchronization signal block sending method described in any of the above embodiments.

An embodiment of the present disclosure further proposes a computer-readable storage medium for storing a computer program; where the computer program, when being executed by a processor, implements the synchronization signal block receiving method described in any of the above embodiments.

An embodiment of the present disclosure further proposes a computer-readable storage medium for storing a computer program; where the computer program, when being executed by a processor, implements the synchronization signal block sending method described in any of the above embodiments.

As shown in FIG. 9, FIG. 9 is a schematic block diagram of an apparatus 900 for sending a synchronization signal block according to an embodiment of the present disclosure. The apparatus 900 may be a base station. Referring to FIG. 9, the apparatus 900 includes a processing component 922, a wireless transmission/reception component 924, an antenna component 926, and a signal processing part specific to a wireless interface, and the processing component 922 may further include one or more processors. One of the processors in the processing component 922 may be configured to implement the synchronization signal block sending method described in any of the above embodiments.

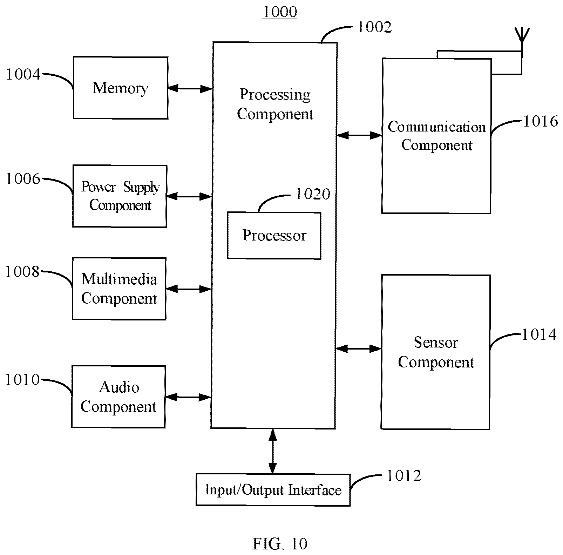

FIG. 10 is a schematic block diagram of an apparatus 1000 for receiving a synchronization signal block according to an embodiment of the present disclosure. For example, the apparatus 1000 may be a terminal, such as a mobile phone, a computer, a digital broadcast terminal, a messaging device, a game console, a tablet device, a medical device, a fitness device, a personal digital assistant, etc.

Referring to FIG. 10, the apparatus 1000 may include one or more of the following components: a processing component 1002, a memory 1004, a power supply component 1006, a multimedia component 1008, an audio component 1010, an input/output (I/O) interface 1012, a sensor component 1014, and a communication component 1016.

The processing component 1002 generally controls the overall operation of the apparatus 1000, such as operations associated with display, phone calls, data communications, camera operations, and recording operations. The processing component 1002 may include one or more processors 1020 to execute instructions to implement all or part of the steps of the synchronization signal block receiving method described in any of the above embodiments. In addition, the processing component 1002 may include one or more modules to facilitate interaction between the processing component 1002 and other components. For example, the processing component 1002 may include a multimedia module to facilitate the interaction between the multimedia component 1008 and the processing component 1002.

The memory 1004 is configured to store various types of data to support operations on the apparatus 1000. Examples of such data include instructions for any application or method operating on the apparatus 1000, contact data, phonebook data, messages, pictures, videos, and the like.

The power supply component 1006 provides power to the various components of the apparatus 1000. The power supply component 1006 may include a power management system, one or more power supplies, and other components associated with generating, managing, and distributing power for the apparatus 1000.

The multimedia component 1008 includes a screen that provides an output interface between the apparatus 1000 and the user. In some embodiments, the screen may include a liquid crystal display (LCD) and a touch panel (TP). If the screen includes a touch panel, the screen may be implemented as a touch screen to receive input signals from the user.

The audio component 1010 is configured to output and/or input audio signals. For example, the audio component 1010 includes a microphone (MIC), and when the apparatus 1000 is in an operation mode, such as a call mode, a recording mode, and a speech recognition mode, the microphone is configured to receive an external audio signal. The received audio signal can be further stored in the memory 1004 or sent via the communication component 1016. In some embodiments, the audio component 1010 also includes a speaker for outputting audio signals.

The I/O interface 1012 provides an interface between the processing component 1002 and peripheral interface modules, such as a keyboards, a click wheel, buttons, etc. These buttons may include, but are not limited to, a home button, a volume button, a start button, and a lock button.

The sensor component 1014 includes one or more sensors for providing status assessment of various aspects for the apparatus 1000.

The communication component 1016 is configured to facilitate wired or wireless communication between the apparatus 1000 and other devices. The apparatus 1000 can access a wireless network based on a communication standard, such as WiFi, 2G, 3G, 4G LTE, 5G NR or a combination thereof. In an illustrative embodiment, the communication component 1016 receives a broadcast signal or broadcast-related information from an external broadcast management system via a broadcast channel. In an illustrative embodiment, the communication component 1016 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an illustrative embodiment, the apparatus 1000 can be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the synchronization signal block receiving method described in any of the above embodiments.

In an illustrative embodiment, a non-transitory computer-readable storage medium including instructions is also provided, such as a memory 1004 including instructions, and the instructions can be executed by the processor 1020 of the apparatus 1000 to complete the synchronization signal block receiving method described in any of the above embodiments. For example, the non-transitory computer-readable storage medium can be a ROM, a random access memory (RAM), a CD-ROM, a magnetic tape, a floppy disk, an optical data storage device, etc.

Those skilled in the art will readily appreciate other embodiments of the present disclosure after considering the specification and practicing the disclosure disclosed herein. The present disclosure is intended to cover any variations, uses, or adaptations of the present disclosure that follow the general principles of the present disclosure and include common knowledge or conventional technical measure in the art that are not disclosed in the present disclosure. The description and embodiments are to be considered illustrative only, and the true scope and spirit of the present disclosure are indicated by the following claims.

It should be understood that the present disclosure is not limited to the precise structures that have been described above and shown in the drawings, and that various modifications and changes can be made without departing from the scope thereof. The scope of the present disclosure is limited only by the appended claims.

## Claims

1. A synchronization signal block receiving method, performed by a terminal, the method comprising:
determining that a synchronization signal block overlaps with uplink transmission in an uplink subband in a time domain resource; and
determining, according to indication information sent by a network device, how to receive the synchronization signal block, or determining, according to an protocol agreement, how to receive the synchronization signal block.

2. The method according to claim 1, wherein the determining, according to the protocol agreement, how to receive the synchronization signal block comprises:
according to the protocol agreement, receiving the synchronization signal block in a case where the number of frequency domain units spaced between the synchronization signal block and the uplink transmission is greater than or equal to a first number.

3. The method according to claim 2, wherein the method further comprises at least one of the following:
determining the first number according to the protocol agreement;
determining the first number according to capability information of the terminal sent to the network device; or
determining the first number according to signaling sent by the network device.

4. The method according to claim 2 or 3, wherein the method further comprises:
determining a case where the number of frequency domain units spaced between the synchronization signal block and the uplink subband is less than a second number as an error case.

5. The method according to any one of claims 1 to 4, wherein the determining, according to the protocol agreement, how to receive the synchronization signal block comprises:
according to the protocol agreement, receiving the synchronization signal block in a case where the uplink transmission is not performed in the time domain resource where the synchronization signal block is located.

6. The method according to claim 5, wherein that the uplink transmission is not performed in the time domain resource where the synchronization signal block is located comprises one of the following:
not expecting that a first time domain resource where the synchronization signal block is located overlaps with a second time domain resource where the uplink transmission is located; or
performing the uplink transmission in a time domain resource in the second time domain resource that does not overlap with the first time domain resource.

7. The method according to any one of claims 1 to 4, wherein the determining, according to the indication information sent by the network device, how to receive the synchronization signal block comprises:
determining, according to the indication information, that the synchronization signal block is able to be received or the uplink transmission is not able to be performed in the time domain resource where the synchronization signal block overlaps with the uplink transmission, and receiving the synchronization signal block in the overlapping time domain resource.

8. The method according to any one of claims 1 to 7, wherein the method further comprises:
sending capability indication information to the network device, wherein the capability indication information is used to indicate that the terminal supports receiving the synchronization signal block in a case where the synchronization signal block overlaps with the uplink transmission in the time domain.

9. The method according to any one of claims 1 to 8, wherein the uplink subband comprises at least one of the following:
an uplink subband configured in a flexible time domain unit; or
an uplink subband configured in a downlink time domain unit.

10. A synchronization signal block sending method, performed by a network device, the method comprising:
determining that a synchronization signal block overlaps with uplink transmission in an uplink subband configured for a terminal in a time domain resource; and
determining, according to indication information sent to the terminal, how to send the synchronization signal block to the terminal, or determining, according to a protocol agreement, how to send the synchronization signal block to the terminal.

11. The method according to claim 10, wherein the determining, according to the protocol agreement, how to send the synchronization signal block to the terminal comprises:
according to the protocol agreement, sending the synchronization signal block to the terminal in a case where the number of frequency domain units spaced between the synchronization signal block and the uplink transmission is greater than or equal to a first number.

12. The method according to claim 11, wherein the method further comprises at least one of the following:
determining the first number according to the protocol agreement;
determining the first number according to capability information of the terminal; or
determining the first number according to signaling sent to the terminal.

13. The method according to any one of claims 10 to 12, wherein the determining, according to the protocol agreement, how to send the synchronization signal block to the terminal comprises:
according to the protocol agreement, sending the synchronization signal block to the terminal in a case where the uplink transmission is not performed in the time domain resource where the synchronization signal block is located.

14. The method according to claim 13, wherein that the uplink transmission is not performed in the time domain resource where the synchronization signal block is located comprises one of the following:
a first time domain resource where the synchronization signal block is sent to the terminal does not overlap with a second time domain resource where the terminal is configured to perform the uplink transmission; or
receiving the uplink transmission of the terminal in a time domain resource in the second time domain resource that does not overlap with the first time domain resource.

15. The method according to any one of claims 10 to 12, wherein the determining, according to the indication information sent to the terminal, how to receive the synchronization signal block comprises:
determining, according to the indication information, that the terminal is able to receive the synchronization signal block or is not able to perform the uplink transmission in the time domain resource where the synchronization signal block overlaps with the uplink transmission, and sending the synchronization signal block to the terminal in the overlapping time domain resource.

16. The method according to any one of claims 10 to 15, wherein the method further comprises:
receiving capability indication information sent by the terminal, wherein the capability indication information is used to indicate that the terminal supports receiving the synchronization signal block in a case where the synchronization signal block overlaps with the uplink transmission in the time domain.

17. The method according to any one of claims 10 to 16, wherein the uplink subband comprises at least one of the following:
an uplink subband configured in a flexible time domain unit; or
an uplink subband configured in a downlink time domain unit.

18. A synchronization signal block receiving apparatus, the apparatus comprising:
a processing module, configured to determine that a synchronization signal block overlaps with uplink transmission in an uplink subband in a time domain resource; and determine, according to indication information sent by a network device, how to receive the synchronization signal block, or determine, according to a protocol agreement, how to receive the synchronization signal block.

19. A synchronization signal block sending apparatus, the apparatus comprising:
a processing module, configured to determine that a synchronization signal block overlaps with uplink transmission in an uplink subband configured for a terminal in a time domain resource; and determine, according to indication information sent to the terminal, how to send the synchronization signal block to the terminal, or determine, according to a protocol agreement, how to send the synchronization signal block to the terminal.

20. A communication system, comprising a terminal and a network device, wherein the terminal is configured to implement the synchronization signal block receiving method according to any one of claims 1 to 9, and the network device is configured to implement the synchronization signal block sending method according to any one of claims 10 to 17.

21. A terminal, comprising:
a processor; and
a memory, configured to store a computer program;
wherein the computer program, when being executed by the processor, implements the synchronization signal block receiving method according to any one of claims 1 to 9.

22. A network device, comprising:
a processor; and
a memory, configured to store a computer program;
wherein the computer program, when being executed by the processor, implements the synchronization signal block sending method according to any one of claims 10 to 17.

23. A computer-readable storage medium configured to store a computer program, wherein the computer program, when being executed by a processor, implements the synchronization signal block receiving method according to any one of claims 1 to 9.

24. A computer-readable storage medium configured to store a computer program, wherein the computer program, when being executed by a processor, implements the synchronization signal block sending method according to any one of claims 10 to 17.
